# EUROPEAN PATENT APPLICATION

(11) **EP 1 039 399 A1**
(43) Date of publication of application: **27.09.2000**
(21) Application number: 99126217.1
(22) Date of filing: 30.12.1999
(51) Int. Cl.: G06F 17/30

(54) **System for extracting and relaying web page information and method**

(30) Priority: 22.03.1999 US 273699
(71) Applicant: SHARP KABUSHIKI KAISHA, Osaka 545-8522 (JP)
(72) Inventor: Kuki, Hikaru, Vancouver, Washington 98683 (US)
(74) Representative: MÜLLER & HOFFMANN Patentanwälte

(57) **Abstract**

A system for extracting and relaying web page information having a connection to a communications network includes a poling mechanism for polling the communications network to find changes in the area-of-interest; and an output mechanism for transmitting changed information to the user. A method of extracting and relaying web page information to a user as the web page information changes includes identifying an area-of-interest on a web page; polling the web page; determining if information in the area-of-interest has changed according to a predetermined criteria; and transmitting changed information only to a user when the information changes.

## Description

### FIELD OF THE INVENTION

This invention relates to an information delivery system for use with a wireless communication device, and specifically to a system that will automatically update a display device upon the occurrence of a predetermined event.

### BACKGROUND OF THE INVENTION

Many kinds of information are offered on the internet. Many companies, schools and government agencies use both internet and intranet communications systems. Many sites on these communications networks, or "nets," offer real-time information, such as stock prices, airline schedules, etc. A user can see the latest information by browsing various web pages using a PC, or other computer-like devices. Wireless data communication continues to develop, and wireless communication devices now allow web access using any of several wireless data protocols.

For example, U.S. Patent No. 5,577,266, to Takahisa et al., for *Broadcast system with associated data capabilities*, granted November 19, 1996, describes a system wherein a user may interactively interface with the system.

U.S. Patent No. 5,617,565, to Augenbraun et al., for *Broadcast interactive multimedia system*, granted April 1, 1997, describes a system which monitors a user's viewing habits, and responds with system-defined updates.

U.S. Patent No. 5,740,549, to Reilly et al., for *Information and advertising distribution system and method*, granted April 14, 1998, describes a system which automatically updates a user's computer at predetermined intervals, or when the user's computer is detected to have been idle for an extended period of time.

Problems occur, however, when a user wants to monitor information using a wireless communication device. First, information on a net changes frequently, so in order to stay current, the user must check and recheck a page frequently in order to monitor changes. This unnecessary manual polling is time consuming, potentially expensive, and adversely impacts the communication device's battery life.

Some web pages are data-base displays and contain a significant amount of data. This means that a user of a small wireless communication device having a low wireless data speed, the data transmission time may be excessive. Furthermore, the screen size of the communication device is usually too small to conveniently view the entire web page.

Known prior art systems allow users to update information on demand, or to periodically receive updated information. The known systems, do not however, provide an automatic transmission to a user upon the occurrence of a predetermined event, such as a change to a specific web page, or to a specific bit of information on a web page.

### SUMMARY OF THE INVENTION

An object of the invention is to provide a system that will automatically inform a user of the occurrence of a predetermined event.

Another object of the invention is to provide a system that will automatically poll a web site, detect a predetermined change on the site, and automatically inform a user of the change.

A further object of the invention is to reduce a user's effort, time, and use of battery power when checking net web pages.

Another object of the invention is to provide a system that will automatically display web page changes on a small, wireless display.

To fulfill the above and other objects, a system of the present invention for extracting and relaying web page information is a system for extracting and relaying web page information over a communications network to a user's terminal, characterized by being furnished with:
polling means for polling the communications network to determine if information of an area-of-interest of the user has changed according to a predetermined criteria; and
output means for outputting a changed content to the user's terminal when the polling means determines an occurrence of information change.

According to the above arrangement, the polling means polls the communications network and determines if information of an area-of-interest of the user has changed according to a predetermined criteria. Thus, the user does not have to poll the communications network manually using his terminal to check the change to the information of the area-of-interest. Consequently, the user's effort, time, and use of battery power when using the user's terminal can be reduced significantly.

Also, when a change is determined by the polling means, the changed content is sent to the user's terminal by the output means. Thus, the user is notified of the changed content through the user's terminal as soon as the change is determined by the polling means. Consequently, the user can always obtain the most recently updated information of the area-of-interest.

In addition, a method of extracting and relaying web page information of the present invention is a method of extracting and relaying web page information over a communications network to a user's terminal, characterized by having:
specifying an area-of-interest of a user from the web page information;
polling the communications network;
determining if information of the area-of-interest of the user has changed according to a predetermined criteria; and
sending a changed content to the user's terminal when an occurrence of a change to the information of the area-of-interest of the user is determined.

According to the above method, the communications network is polled and if information of an area-of-interest of the user has changed according to a predetermined criteria is determined. Thus, the user does not have to poll the communications network manually using his terminal to confirm the change to the information of the area-of-interest. Consequently, the user's effort, time, and use of battery power when using the user's terminal can be reduced significantly.

Also, when a change to information of the area-of-interest according to the predetermined criteria is determined, the changed content is sent to the user's terminal. Thus, the user is notified of the changed content through the user's terminal as soon as the change is determined. Consequently, the user can always obtain the most recently updated information of the area-of-interest.

These and other objects and advantages of the invention will become more fully apparent as the description which follows is read in conjunction with the drawings.

### BRIEF DESCRIPTION OF THE DRAWINGS

Fig. 1 is a block diagram schematically showing the architecture of a system for extracting and relaying web page information in accordance with one embodiment of the invention;
Fig. 2 is a block diagram of a specific application of the above system;
Fig. 3 is a view showing an example display on the screen of a web page containing information to be monitored by the above system;
Fig. 4 is a view showing another example display on the screen of the web page:
Fig. 5 is a view showing an example display screen of display means provided to a wireless communication device employed in the above system; and
Fig. 6 is a view showing another example display screen of the display means provided to the above wireless communication device.

### DESCRIPTION OF THE EMBODIMENTS

Referring to the accompanying drawings, the following description will describe one embodiment of the present invention.

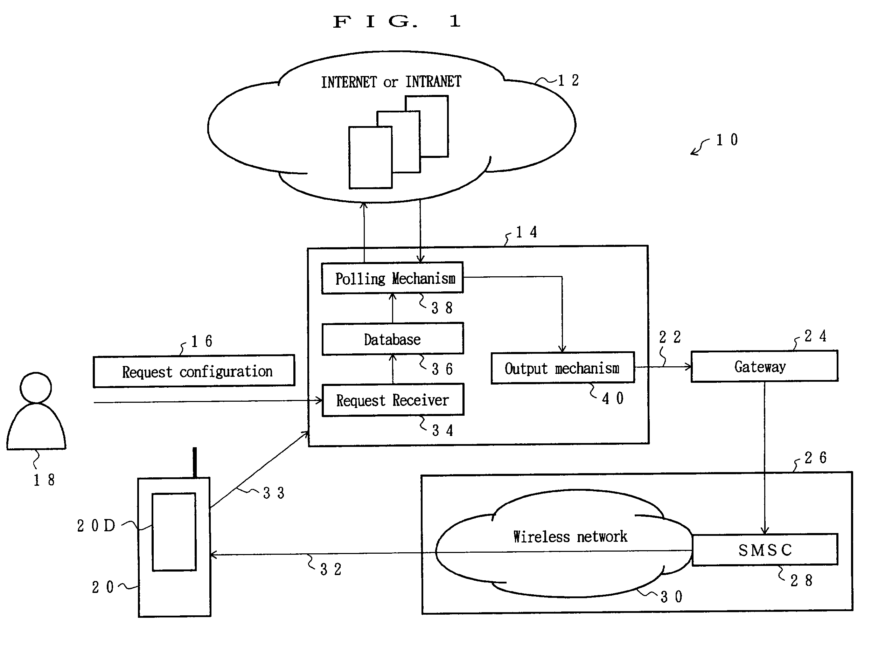

A system for extracting and relaying web page information of the invention is generally arranged as denoted by numeral 10 in Fig. 1. The system 10 includes an internet or intranet communications network, also referred to herein as a "net" 12. An information tracking server 14 is in periodic or continuous communications with net 12, and is responsive to a configuration request 16 from a user 18, who has a wireless communication device (user's terminal) 20. The configuration request 16 referred to herein is defined as established information relating to an area-of-interest of the user 18.

Server 14 sends a message 22, using EMail or wireless access protocol (WAP), or other communications network, through a gateway 24, if necessary, to a wireless service provider 26, where the signal is processed by a short message service center (SMSC) mechanism 28, and is then broadcast over a wireless network 30 as a wireless message 32 to a wireless communication device 20, having a display screen 20D. Communication device 20 may also access server 14, as depicted by arrow 33, which is understood to constitute bi-directional communications through wireless network 30.

Server 14 includes means to monitor changes that occur on net 12, and specifically includes a mechanism for user 18 to easily specify the part of information that is to be tracked. This includes a web-based request receiver 34, a user configurable database 36, and a web page polling mechanism 38. Polling mechanism 38 periodically interrogates net 12 to determine if changes have occurred to an area-of-interest, designated by user 18. If the area-of-interest on the web page changes, the changed part only is sent to the wireless communication device. User 18 may get the changed information anywhere in the wireless network operating area as the information is changed. User 18 is informed of the changed information, and, if necessary, user 18 may access the entire source web page. When a change to an area-of-interest is detected, an output mechanism (output means) 40 generates message 22, which ultimately causes user 18 to be notified of the change. User 18 then has the option of responding to the change using communication device 20 and the rest of system 10.

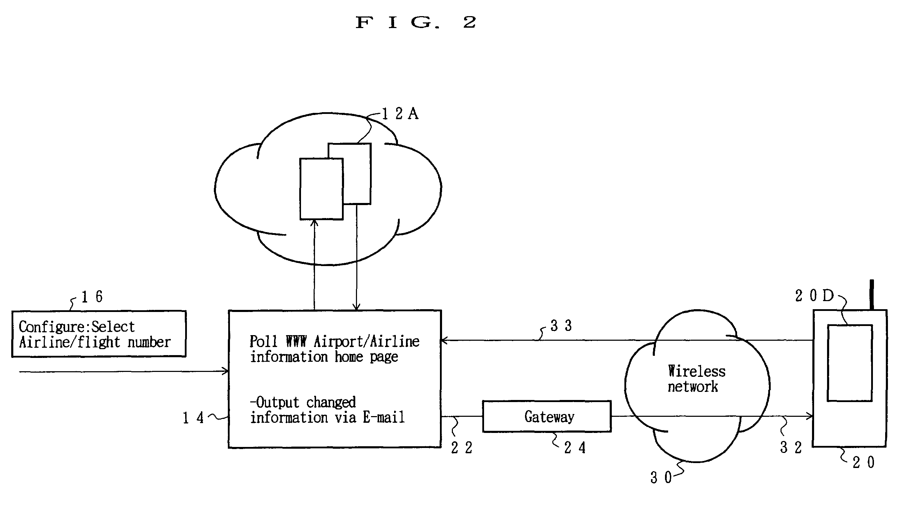

Referring now to Figs. 1 and 2, the method of the invention that is used to detect the changes in a web page will be described. Fig. 2 is a block diagram of a specific application of system 10 given below.

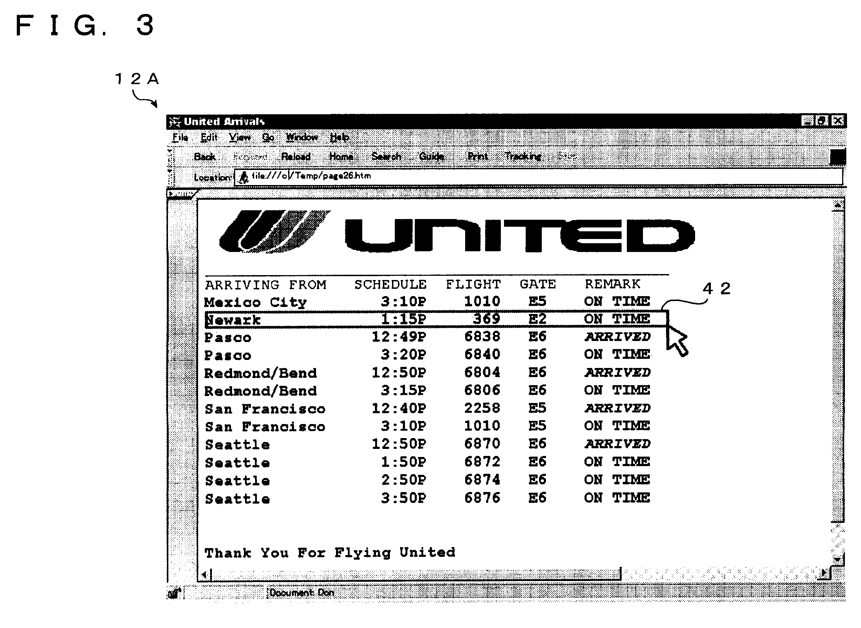

Communication device 20 is presumed to have a display screen 20D, that has the capability to show the changed information. A web page in the Internet/Intranet site is normally represented by XML (Extensible Markup Language), HTML (Hyper Text Markup Language), HDML (Handheld Devices Markup Language), WML (Wireless Markup Language), CDF (Channel Definition Format), image, or plain text. The whole network is called WWW (World Wide Web). User 18 normally can access the server with HTTP (Hyper Text Transfer Protocol) or a related protocol and view information using browser software on a PC. For example, user 18 is enroute to an airport to catch a flight, and the weather is troublesome. User 18 uses a PC to access and airline web page 12A, shown in Fig. 3, displaying flight information for the flight-of-interest. The flight-of-interest is highlighted, selected area 42, or otherwise selected by user 18.

The method of specifying the necessary part of information is GUI (Graphical User Interface) based and user 18 can easily and directly specify only the necessary part of information described using a pointing device on the specific web page. For example, user 18 can enclose the field of necessary information using mouse and set the criteria for notification, such as when a specific word appears, when the information in the field has changed, or when a specific time has passed.

If necessary, user 18 encloses two or more separate fields: the first for a field to track, and the second for a field to send, etc. In this case, user 18 is interested in any change of information for the specific flight, and server 14 will monitor page 12A for any changes in the flight-of-interest.

Regarding logic to detect change, it may be necessary to identify field type, i.e., text, time, money, etc. Some field types permit the user to select minimum change to cause notification, i.e., "send message only if price on stock rises to a predetermined price." This function may be resident in the user's own PC, or may reside on the server.

The method to detect the change of information on net 12 normally adopts the mechanism of accessing the net web site periodically and examining tracked information or detecting a difference between past information and present information. The changed information is sent to wireless communication device via a commonly used protocol known as short message service (SMS). As in the case of the configuration, the message transmission function may be implemented by software resident on user 18's PC, or by software resident on server 14.

The method to send via wireless network 30 uses usually widely spread wireless data communication infrastructure, for example, SMS of GSM (Group Special Mobile). Communication device 20 offers an easy means to view and understand received information.

Returning to the example, when the flight schedule of arrival or departure changes, or if the gate number changes, the new information is sent to wireless communication device 20 and is displayed on display screen 20D. User 18 then knows the status of the flight, i.e., delayed or cancelled, gate number, etc. If the airline company opens the reservation system, the user may also keep track of other flights and book a reservation, if desired.

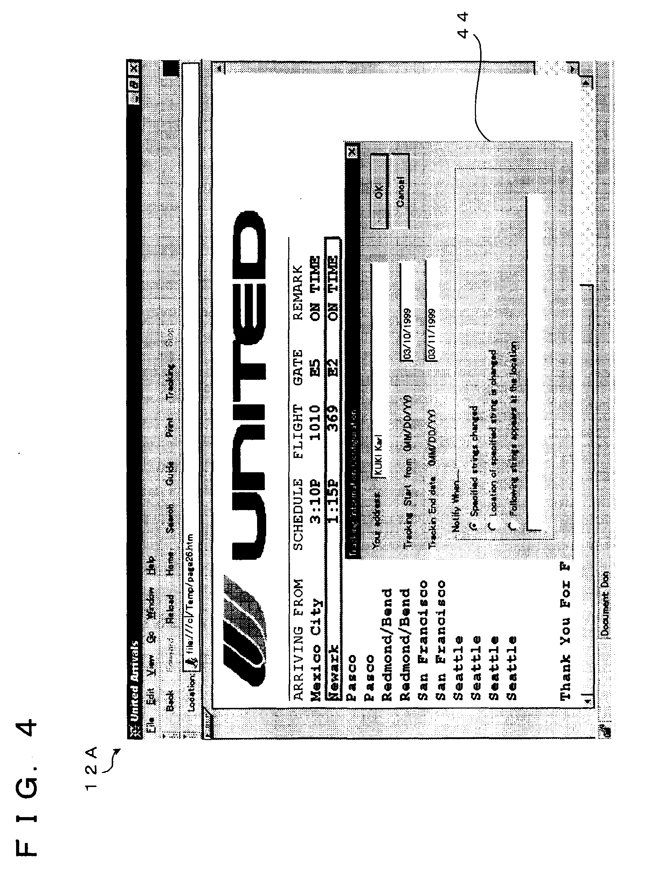

There are two ways to specify the area-of-interest. One way is to access the Airline or Airport web page 12A, and directly specify the necessary part of information on the screen using a mouse as shown in Fig. 3. When the information in a rectangle 42 has changed, or satisfies some predetermined criteria, the updated selected information is sent to wireless communication device. After the area-of-interest is selected, another configuration window 44 appears to allow input of more detailed information as shown in Fig. 4 to specify recipient, category, start tracking time, specific criteria, timing of delivery to communication device, etc.

If the location of the area-of-interest on the screen is not stable or is not displayed, a configuration window 44 in Fig. 4 may also be used to directly input all of the necessary information by a manual input, such as key words, category, etc. These functions may be resident in the user's own computer, or on the server. After the configuration of necessary information, the information tracking server will monitor the web page for changes.

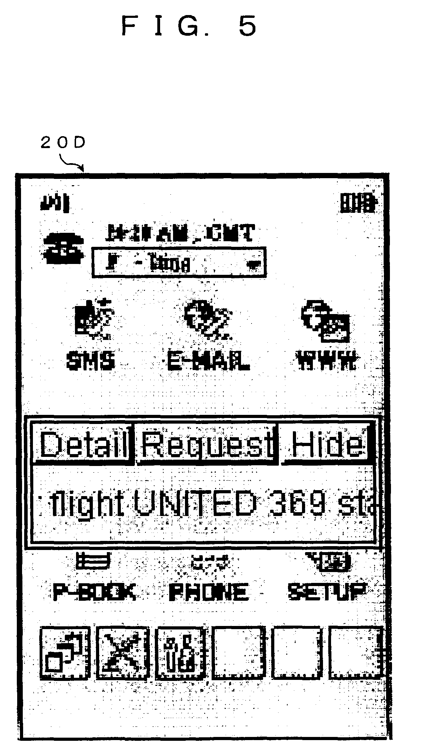

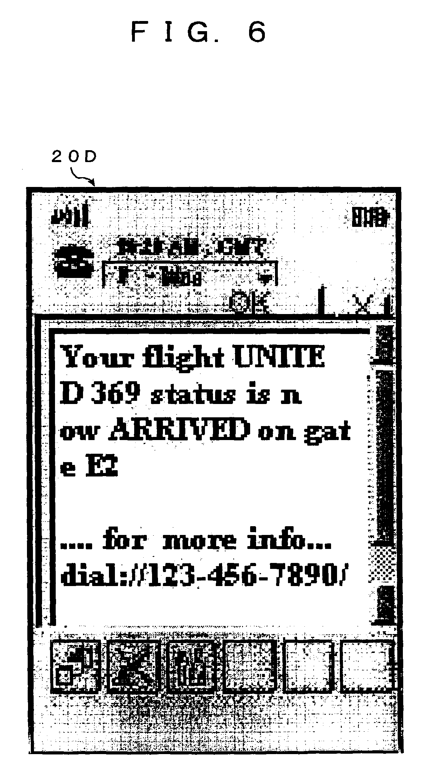

The information sent to communication device can be seen on the screen of the device. The display format is optional, as shown in Figs. 5 and 6, which show an example of possibly display readouts on the display screen 20D. If the user wants to see the entire web page, the user clicks the message or URL (Uniform Resource Locator) part of the screen, and the communication device will connect to the actual web page. Although the system of the invention is described using a wireless communications network to notify user 18 of changes to a particular area-of-interest, the system may be adapted to use wired communications networks.

Other examples of real time information are given below. User 18 can personally track these status using the wireless communication device.

### (a) Road condition change

If an accident occurs and traffic is stopped on the currently traveled street, the event notification is sent to the wireless communication device. Commuters can check road conditions before beginning a journey, and may receive updates while enroute.

### (b) Accounting balance change

This information notifies user of the change of an account balance. This will help a user to confirm a deposit or withdrawal amount for the account.

### (c) Package delivery status

A user may track the location of package as the package moves between sender and recipient, and allows a user to estimate when the packet is to arrive.

### (d) Stock quotes

Stock information is presented on many net web pages. A user may be notified when the price of a stock or mutual fund exceeds a specified certain predefined price, and the updated new price can be sent to the wireless communication device.

Key to the invention is the mechanism that allows user to specify the web page information fields which are to be monitored and forwarded to the user in the event of a change. The system is beneficial in that (1) the user always has latest data; (2) there is no unnecessary polling required of the user; and (3) the system does not require changes to any HTML, XML, or other page format in order to operate.

The user may directly specify only a part of information that the user wants to track on the web page using PC or server, and if the information change occurs, the changed part is sent to the wireless communication device. In some cases, user may need to specify two or more regions: one that is to be tracked, and the other for data that is to be sent upon the occurrence of a predetermined event. The user may also specify the delivery criteria, such as when a specific word appears, when the information in the field has changed, or when a specific time has passed. If the information in the web page matches the criteria, the changed information is transmitted to the user's wireless communication device.

As has been discussed, the system 10 of the present embodiment for extracting and relaying web page information is a system for extracting and relaying web information over the net 12 to the user's wireless communication device 20, comprising:
a polling mechanism 38 for polling the net 12 to determine if web page information of an area-of-interest of the user has changed according to a predetermined criteria; and
an output mechanism 40 for outputting a changed content to the wireless communication device 20 when the polling mechanism 38 determines an occurrence of information change.

According to the above arrangement, the polling mechanism 38 polls the net 12 and determines if web page information of the area-of-interest of the user has changed according to a predetermined criteria. Thus, the user does not have to poll the net 12 manually using his wireless communication device 20 to check the change to the information of the area-of-interest. Consequently, the user's effort, time, and use of battery power when using the wireless communication device 20 can be reduced significantly.

Also, when a change is determined by the polling mechanism 38, the changed content is sent to the wireless communication device 20 by the output mechanism 40. Thus, the user is notified of the changed content through the wireless communication device 20 as soon as the change is determined by the polling mechanism 38. Consequently, the user can always obtain the most recently updated information of the area-of-interest.

The system 10 is arranged in such a manner as to further comprise the request receiver 34 for receiving the setting information of an area-of-interest of the user , which is established by the user, through the communication means.

According to the above arrangement, the setting information of the area-of-interest of the user established by the user can be received by the request receiver 34 through the communication means. Hence, when the user changes the setting of the area-of-interest, such a change can be reflected on the polling action by the polling mechanism 38 immediately. This allows the user to change the setting information of the area-of-interest in real time, thereby making it possible to obtain desired information at any time under the current circumstances.

The system 10 is arranged in such a manner as to further comprise the request receiver 34 for receiving setting information of the predetermined criteria, which is established by the user, through communication means.

According to the above arrangement, the setting information of the predetermined criteria established by the user can be received by the request receiver 34 through the communication means. Hence, when the user changes the criteria for a change to the area-of-interest, such a change can be reflected on the action of the polling mechanism 38 immediately in determining if information change occurs in the area-of-interest. This allows the user to change the criteria for a change to the area-of-interest in real time, thereby making it possible to control the notification of a change to the area-of-interest under the current circumstances.

The system 10 is arranged in such a manner that the output mechanism 40 sends the changed content to the wireless communication device 20 through the wireless communications network 30.

According to the above arrangement, the changed content is sent to the wireless communication device 20 from the output mechanism 40 through the wireless network 30. Thus, the user can always know a change to information of the area-of-interest if he carries the wireless communication device 20 with him. For example, if the wireless communication device 20 is installed or carried in an automobile, and traffic information is set as the area-of-interest, then the user at the wheel can receive traffic jam information in real time.

The system 10 is arranged in such a manner that the wireless communication device 20 includes the display screen 20D which displays information.

According to the above arrangement, the wireless communication device 20 includes the display screen 20D which displays information. Thus, when the change to information of the area-of-interest is notified, the content thereof can be displayed on the display screen 20D, thereby enabling the user to check the changed content immediately.

A method of the present embodiment for extracting and relaying web page information is a method for extracting and relaying web page information over the net 12 to the user's wireless communication device 20 having:
specifying an area-of-interest of a user from the web page information;
polling the net 12;
determining if information of the area-of-interest of the user has changed according to a predetermined criteria; and
sending a changed content to the wireless communication device 20 when a change to the information of the area-of-interest of the user is determined.

According to the above method, the net 12 is polled and if web page information of an area-of-interest of the user has changed according to a predetermined criteria is determined. Thus, the user does not have to poll the net 12 manually using the wireless communication device 20 to check the change to the information of the area-of-interest. Consequently, the user's effort, time, and use of battery power when using the wireless communication device 20 can be reduced significantly.

Also, when a change to information of the area-of-interest is determined according to the predetermined criteria, the changed content is sent to the wireless communication device 20. Thus, the user is notified of the changed content through the wireless communication device 20 as soon as the change is determined. Consequently, the user can always obtain the most recently updated information of the area-of-interest.

The method is arranged in such a manner that the area-of-interest of the user is changed by the user through communication means.

According to the above method, the area-of-interest can be changed by the user through the communication means. Hence, when the user changes the area-of-interest, such a change can be reflected on the polling action immediately. This allows the user to change the area-of-interest in real time, thereby making it possible to obtain desired information at any time under the current circumstances.

The method is arranged in such a manner that the predetermined criteria is changed by the user through communication means.

According to the above method, the setting information of the predetermined criteria can be changed through the communication means. Hence, when the user changes the criteria for the area-of-interest, such a change can be reflected immediately on the polling action to determine if the information of the area-of-interest has changed. This allows the user to change the criteria set for a specific area-of-interest in real time, thereby making it possible to control the notification of a change to information of the area-of-interest under the current circumstances.

The method is arranged in such a manner that information is sent to the wireless communication device 20 through the wireless communications network 30.

According to the above method, the changed content is sent to the wireless communication device 20 through the wireless network 30 if he carries the wireless communication device 20 with him. Thus, the user can always know a change to information of the area-of-interest. For example, if the wireless communication device 20 is installed or carried in an automobile, and traffic information is set as the area-of-interest, then the user at the wheel can receive traffic jam information in real time.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A system for extracting and relaying web page information over a communications network (12) to a user's terminal (20), comprising:
polling means (38) for polling said communications network (12) to determine if web page information of an area-of-interest of the user has changed according to a predetermined criteria; and
output means (40) for outputting a changed content to said user's terminal (20) when said polling means (38) determines an occurrence of information change.

2. The system of Claim 1, further comprising receiving means (34) for receiving setting information of the area-of-interest of the user, which is established by the user, through communication means.

3. The system of Claim 1, further comprising receiving means (34) for receiving setting information of said predetermined criteria, which is established by the user, through communication means.

4. The system of Claim 1, wherein said output means (40) sends the changed content to said user's terminal (20) through a wireless communications network (30).

5. The system of Claim 1, wherein said user's terminal (20) includes display means (20D) which displays information.

6. A method of extracting and relaying web page information over a communications network (12) to a user's terminal (20), comprising:
specifying an area-of-interest of a user from the web page information;
polling said communications network (12);
determining if information of the area-of-interest of the user has changed according to a predetermined criteria; and
sending a changed content to said user's terminal (20) when a change to the information of the area-of-interest of the user is determined.

7. The method of Claim 6, wherein the area-of-interest of the user is changed by the user through communication means.

8. The method of Claim 6, wherein said predetermined criteria is changed by the user through communication means.

9. The method of Claim 6, wherein information is sent to said user's terminal (20) through a wireless communications network (30).
